# EUROPÄISCHE PATENTSCHRIFT

(11) **EP 3 221 615 B1**
(45) Veröffentlichungstag und Bekanntmachung des Hinweises auf die Patenterteilung: **13.05.2020**
(21) Anmeldenummer: 15797107.8
(22) Anmeldetag: 19.11.2015
(51) Int. Cl.: F16H 61/02, F16H 59/02, B60K 23/02

(54) **VERFAHREN UND VORRICHTUNG ZUM BETREIBEN EINES KRAFTFAHRZEUGS**
METHOD AND DEVICE FOR OPERATING A MOTOR VEHICLE
PROCÉDÉ ET DISPOSITIF POUR FAIRE FONCTIONNER UN VÉHICULE AUTOMOBILE

(30) Priorität: 20.11.2014 DE 102014017175
(43) Veröffentlichungstag der Anmeldung: 27.09.2017
(73) Patentinhaber: Audi AG, 85045 Ingolstadt (DE)
(72) Erfinder: SCHULZE, Sebastian, 85092 Kösching (DE)
(74) Vertreter: Lehle, Josef
(86) Internationale Anmeldenummer: PCT/EP2015/077088
(87) Internationale Veröffentlichungsnummer: WO 2016/079234

(56) Entgegenhaltungen:
- EP-A1- 2 239 484
- EP-A2- 2 902 296
- US-A- 5 095 434
- US-A1- 2007 130 931
- US-A1- 2011 036 191

## Beschreibung

Die vorliegende Erfindung bezieht sich auf ein Verfahren zum Betreiben eines Kraftfahrzeugs gemäß dem Oberbegriff des Patentanspruchs 1, sowie auf eine Vorrichtung zur Durchführung des Verfahrens gemäss dem Oberbegriff des Anspruchs 9 (siehe US 2007/130931 A oder EP 2 253 861 A).

Bei Kraftfahrzeugen ist es allgemein üblich, diese mit automatischen Getrieben (ohne Kupplungspedal) oder mit Schaltgetrieben und Kupplungspedal zum Wechseln der Gänge auszurüsten. Auch automatisierte Schaltgetriebe (zum Beispiel Doppelkupplungsgetriebe) werden vielfach eingesetzt. Bei automatischen Getrieben können zum Beispiel durch definierte Wählhebelstellungen feste Übersetzungsverhältnisse im Automatikbetrieb manuell gesteuert werden. Die Akzeptanz entweder automatischer Getriebe oder Schaltgetriebe ist nicht eindeutig, so dass seitens der Fahrzeughersteller beide Getriebearten mit einem nicht unbeträchtlichen Entwicklungs- und Fertigungsaufwand bereitzustellen sind.

Aufgabe der Erfindung ist es, ein Verfahren zum Betreiben eines Kraftfahrzeugs und eine Vorrichtung zur Durchführung des Verfahrens anzugeben, mittels dem bei verringertem Entwicklungsaufwand beiden Betriebsarten Rechnung getragen werden kann.

Die Aufgabe ist durch die Merkmale des Patentanspruchs 1 sowie des Patentanspruchs 9 gelöst. Bevorzugte Weiterbildungen sind in den Unteransprüchen offenbart.

Erfindungsgemäß wird vorgeschlagen, dass bei einem Kraftfahrzeug der gattungsgemäßen Art mit automatischem Getriebe auf Käuferwunsch Einrichtungen mit einem Kupplungspedal zum subjektiven Trennen der Antriebsverbindung, ein Schalthebel zum manuellen Schalten der Übersetzungsstufen und ein elektronisches Steuergerät vorgesehen sind, mittels dem die Funktionen Kuppeln und Schalten in korrespondierende Steuersignale für das automatische Getriebe umgesetzt werden.

Kerngedanke der Erfindung ist es, ein Kraftfahrzeug quasi mit Handschaltgetriebe anzubieten, das analog mit Kupplungspedal und Schalthebel wie üblich bedienbar ist, jedoch letztendlich mit einem automatischen Getriebe bestückt ist. Dies ermöglicht es, Schaltgetriebe zumindest in definierten Fertigungslinien (zum Beispiel für hohe Motorleistungen) nicht mehr bereitstellen zu müssen, sondern durch vorhandene automatische Getriebe zu ersetzen. Für den Käufer des Kraftfahrzeugs ist der Fahrbetrieb wie gewohnt bzw. gewünscht entsprechend einem Handschaltgetriebe mit Kupplungsbetätigung und Handschaltung.

Dabei kann bevorzugt das Kupplungspedal in der Pedalkraft und der Kupplungsfunktion ähnlich der Kupplungsbetätigung des handgeschalteten Kraftfahrzeugs ausgelegt und auf die Steuerung des automatischen Getriebes übertragen werden. Ferner können die Pedalkraft und/oder die Kupplungsfunktion variabel steuerbar sein, um beispielsweise eine sportliche oder komfortable Haptik zu vermitteln.

Des Weiteren kann der Schalthebel in einer einem handgeschalteten Schaltgetriebe nachgebildeten Schaltkulisse angeordnet sein, mittels der neben einer Leergasse eine definierte Anzahl von Vorwärtsgängen und ein Rückwärtsgang schaltbar sind, wobei die Schaltsignale über das Steuergerät in eine entsprechende Steuerung des automatischen Getriebes in feste Übersetzungsverhältnisse umgewandelt wird. Damit kann vorteilhaft die Vision eines Kraftfahrzeugs mit üblicher Handschaltung vertieft werden. Insbesondere kann der Schalthebel in der Schaltkulisse entsprechend eines bei handgeschalteten Kraftfahrzeugen bekannten H-Schaltbilds geschaltet und in einer bei handgeschalteten Kraftfahrzeugen üblichen Rastierung und Schaltkraft nachgebildet werden.

Des Weiteren wird vorgeschlagen, dass bei nicht betätigtem Kupplungspedal der Schalthebel in der Schaltkulisse zur Vermeidung von Fehlschaltungen elektronisch oder mechanisch blockiert wird, ein Schaltvorgang also nur bei entsprechender Kupplungsbetätigung eingeleitet werden kann.

Das Steuergerät des automatischen Getriebes ist mittels einer Schalteinrichtung von Handschaltung auf automatische Schaltung umschaltbar, wobei dann die Steuersignale des Kupplungspedals und des Schalthebels entsprechend unterdrückt werden. Damit gelingt es, unter Berücksichtigung bereits vorhandener Steuergeräte für automatische Getriebe diese mit geringem Mehraufwand auf beide Betriebsarten (Handschaltung, Automatikbetrieb) zu modifizieren.

Dabei können besonders vorteilhaft in der Schaltkulisse elektrische Anzeigen vorgesehen werden, die bei einem Umschalten des Steuergeräts auf Automatikbetrieb von Ganganzeigen (zum Beispiel 1 - 6, R) in Fahrbetriebsmodi (zum Beispiel D, S, R, P) verändert werden, um somit in beiden Betriebsarten zuverlässige Anzeigen der Wählhebel- oder Schaltstellungen bereitzustellen.

Eine Vorrichtung zur Durchführung des Verfahrens an einem Kraftfahrzeug mit zumindest einer Antriebsmaschine und einem automatischen Getriebe besteht darin, dass eine Kupplungseinrichtung mit einem schwenkbar gelagerten Kupplungspedal und einem Kupplungsbetätigungskräfte simulierenden Aktuator, eine einem Handschaltgetriebe entsprechende Schaltbetätigungseinrichtung mit einem entsprechend Gangstellungen und einem Leerlauf simulierenden Aktuator vorgesehen sind und dass die Aktuatoren elektrische Signale zur Steuerung des automatischen Getriebes in einem Handschaltmodus abgeben.

Dabei ist ein elektrischer Umschalter vorgesehen, mittels dem das Kraftfahrzeug auf automatischen Fahrbetrieb umsteuerbar ist, bei dem die Signale der Kupplungseinrichtung und der Schalteinrichtung unterdrückt sind. Das Kraftfahrzeug kann dementsprechend im Handschaltmodus oder im Automatikmodus betrieben werden, wobei der steuerungstechnische Mehraufwand relativ gering ist.

Schließlich kann das automatische Getriebe ein an sich bekanntes Doppelkupplungsgetriebe sein, dessen beide Kupplungen im Handschaltbetrieb über das Kupplungspedal und dessen Schaltaktuatoren über die Schaltbetätigung entsprechend angesteuert sind.

Ein Ausführungsbeispiel der Erfindung ist nachstehend näher beschrieben. Es zeigen:
- Fig. 1: als Blockschaltbild das Antriebssystem eines allradgetriebenen Personenkraftfahrzeugs, mit einer Antriebsmaschine und einem automatischen Doppelkupplungsgetriebe, wobei durch Anordnung eines Kupplungspedals und einer Schaltkulisse mit Schalthebel ein Handschaltmodus simulierbar ist,
- Fig. 2: eine skizzenhafte Draufsicht auf die Schaltkulisse, mittels der mehrere Vorwärtsgänge und ein Rückwärtsgang manuell schaltbar sind, und
- Fig. 3: die Schaltkulisse nach den Fig. 1 und 2 in einer elektrisch umgeschalteten Version zum Betreiben des Antriebssystems in einem Automatikmodus.

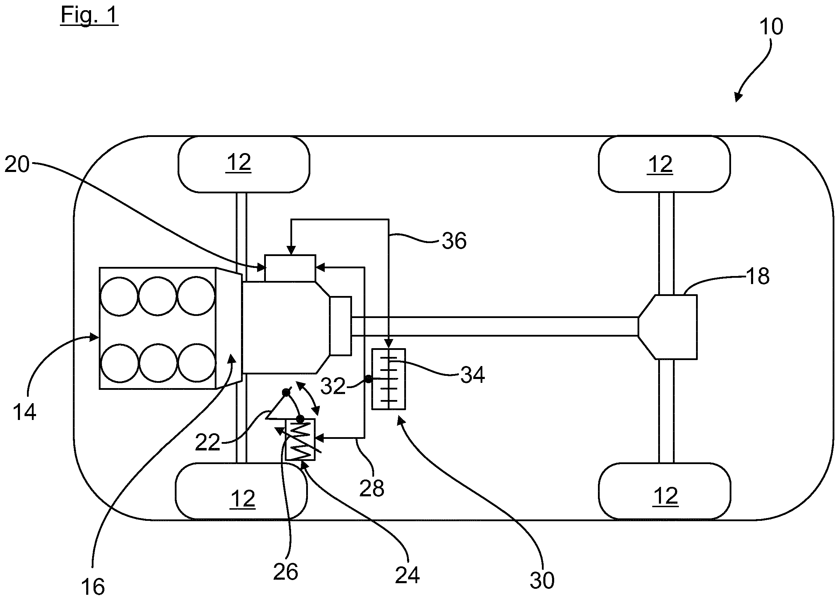

In der Fig. 1 ist als Blockschaltbild und grob schematisch ein Personenkraftfahrzeug 10 dargestellt, dessen vordere und hintere Räder 12 in bekannter Weise über ein Antriebssystem mit einer Antriebsmaschine bzw. Brennkraftmaschine 14, einem automatisch schaltbaren Getriebe, insbesondere einem Doppelkupplungsgetriebe 16 als Geschwindigkeits-Wechselgetriebe und mit im Kraftfluss nachgeschalteten Differenzialgetrieben 18 (das vordere Differenzialgetriebe ist in das Doppelkupplungsgetriebe 16 integriert) antreibbar sind.

Das gezeigte Antriebssystem mit längseingebauter Brennkraftmaschine 14 und unmittelbar angeflanschtem Doppelkupplungsgetriebe 16 kann auch im Quereinbau front- oder heckseitig oder in einer Längsanordnung mit Mittelmotor, etc. im Kraftfahrzeug angeordnet sein.

Das Doppelkupplungsgetriebe 16 ist mittels eines elektronischen Steuergeräts 20 steuerbar, über das die beiden integrierten Kupplungen und die Gangschaltungen in den beiden Zahnräder-Teilgetrieben zur Schaltung der Übersetzungsstufen bzw. Gänge über elektrohydraulisch betätigte Aktuatoren gesteuert sind. Es wird hier auf die aus dem Stand der Technik bekannten, vielfach angewendeten Konstruktionen verwiesen.

Das Antriebssystem mit dem Doppelkupplungsgetriebe 16 kann über das modifizierte Steuergerät 20 in einem Handschaltmodus entsprechend einem Kraftfahrzeug mit Schaltgetriebe oder im an sich bekannten Automatikmodus betrieben werden. Die Steuerung kann aber auch so ausgelegt sein, dass nur ein Handschaltmodus vorliegen kann.

Abweichend zur üblichen Auslegung in Kraftfahrzeugen mit automatischen Getrieben ist das Fußhebelwerk so ausgeführt, dass neben dem üblichen Bremspedal und Gaspedal (nicht dargestellt) auch ein Kupplungspedal 22 mit einem Aktuator 24 verbaut ist.

Der Aktuator 24 weist in seiner Konstruktion eine hydraulisch gedämpfte Feder 26 auf und ist so konzipiert, dass er eine einer üblichen Kupplungsbetätigung analoge Pedalkraft bzw. Kraft-Weg-Kennlinie erzeugt. Gegebenenfalls kann über eine Verstelleinrichtung (nicht dargestellt) die simulierte Kupplungsbetätigung in zum Beispiel eine sportliche Auslegung oder komfortable Auslegung mit entsprechender Aktivierung der Kupplungen im Doppelkupplungsgetriebe 16 verändern.

Der Aktuator 24 am Kupplungspedal 22 ist mit dem elektronischen Getriebesteuergerät 20 signaltechnisch verbunden (Leitung 28) und steuert somit zum Beispiel über ein Potentiometer im Handschaltmodus das Öffnen und Schließen der beiden Kupplungen, die zur Simulierung eines die Zugkraft beim Gangwechsel unterbrechenden Schaltgetriebes gleichzeitig oder alternierend geöffnet werden und die abhängig von der Kupplungspedalbetätigung gezielt schneller oder langsamer wieder Schließen.

Ferner ist im Kraftfahrzeug eine Schalteinrichtung 30 vorgesehen, die eine Schaltbetätigung eines Schalthebels 32 in einer vorgegebenen Kulissenführung 34 ermöglicht. Die Betätigung des Schalthebels (32) in der Schaltkulisse (34) kann bevorzugt einer bei handgeschalteten Kraftfahrzeugen üblichen Rastierung und Schaltkraft nachgebildet sein.

Der Aktuator ist ferner mit einer Sperre (nicht dargestellt) versehen, mittels der bei nicht betätigtem Kupplungspedal 22 der Schalthebel 32 entweder elektronisch oder mechanisch blockiert ist; es kann demzufolge nur bei getretenem Kupplungspedal 22 geschaltet werden.

Die Schalteinrichtung 30 mit dem Schalthebel 32 ist ebenfalls wie mit der Leitung 36 in Fig. 1 angedeutet mit dem elektronischen Getriebesteuergerät 20 signaltechnisch verbunden und kann entsprechend der Stellung des Schalthebels 32 elektrische Signale an das modifizierte Steuergerät 20 abgeben.

Im Handschaltmodus des Antriebssystems wird das Kraftfahrzeug 10 wie ein herkömmliches Kraftfahrzeug mit Schaltgetriebe betrieben. Das heißt, es wird zum Schalten zunächst ausgekuppelt und dann werden entsprechend über den Schalthebel 32 die Gänge geschaltet. Dabei geben sowohl der Aktuator des Kupplungspedals 22 als auch der Aktuator der Schalteinrichtung 30 elektrische Signale an das modifizierte Steuergerät 20 ab, welches diese Signale in die automatische Getriebesteuerung des Doppelkupplungsgetriebes 16 umsetzt.

Weder die Kupplungseinrichtung 24 noch die Schalteinrichtung 30 sind mechanisch mit dem Doppelkupplungsgetriebe 16 verbunden (clutch and shift by wire).

Im Kraftfahrzeug kann ferner ein Umschalter (nicht dargestellt) zum Beispiel an der Schalteinrichtung 30 vorgesehen sein, der die Getriebesteuerung auf Automatikbetrieb umschalten kann.

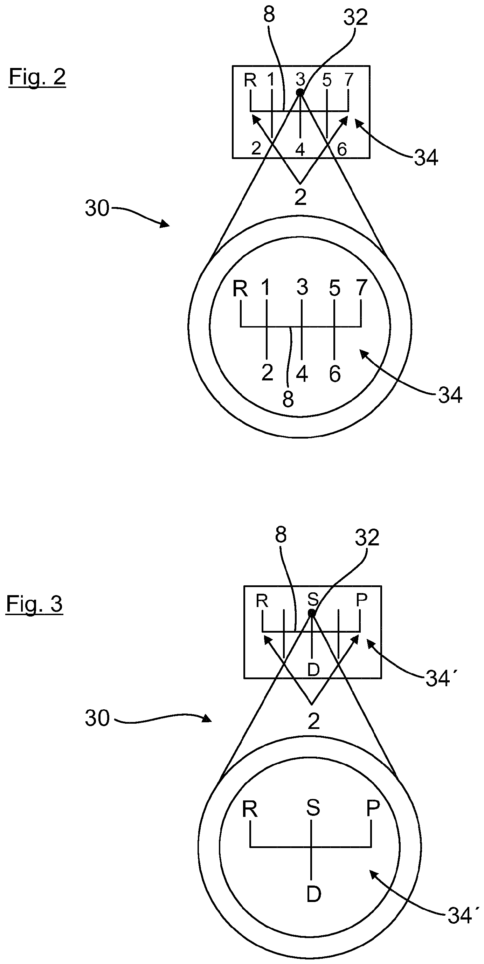

Dabei kann der Aktuator der Schalteinrichtung 30 (vergleiche Fig. 3) so ausgeführt sein, dass er nur noch veränderte Schaltwege des Schalthebels 32 in der Schaltkulisse 34' zulässt, wobei sich die bevorzugt elektrische Schaltanzeige von Ganganzeigen 1 bis 7, etc. in automatische Fahrmodi (zum Beispiel R, S, D, P, etc.) umschaltet.

Ist der automatische Fahrbetrieb über den nicht dargestellten Umschalter gewählt, so werden die entsprechenden, elektrischen Signale beim Betätigen des Kupplungspedals 22 und die Gangsignale des Handschaltmodus unterdrückt und das elektronische Getriebesteuergerät 20 schaltet den Fahrbetriebe in der automatischen Getrieben üblichen Art, nur noch gesteuert über den dann als Wählhebel funktionierenden Schalthebel 32 (Fig. 3). Gegebenenfalls kann die Kupplungseinrichtung 24 so ausgeführt sein, dass im Automatikmodus das Kupplungspedal 22 in einer eingefahrenen (quasi ausgekuppelten) Position gehalten ist.

Die vorgeschlagene Verwendung des an sich automatisierten Wechselgetriebes bzw. bevorzugt Doppelkupplungsgetriebes 16 hat auch im Handschaltmodus weitere Vorteile in der Getriebesteuerung zur Absicherung eines zuverlässigen, komfortablen Fahrbetriebs.

Es können zum Beispiel gezielt schnellere Schaltvorgänge bei gegebenenfalls extrem kurzen Schaltwegen am Schalthebel 32 dargestellt werden. Auch Eingriffe wie Abwürgeschutz der Brennkraftmaschine 12 bei zu schneller Kupplungsentlastung, Anfahrunterstützung, Abkoppeln der Brennkraftmaschine 12 im Schubbetrieb (Segeln), etc. können wie bei Kraftfahrzeugen mit Automatikbetrieb dem Handschaltmodus überlagert werden.

Über beispielsweise einem Sensor im oder am Schalthebel 32 lässt sich gegebenenfalls frühzeitig der Wunsch des Fahrers vorhersagen. Schaltet dieser aus der Gangstellung bei getretener Kupplung in die Leergasse 8, wird das Getriebe 16 bei geöffneten Kupplungen in Neutral geschaltet. Wird dann eine Ganggasse gewählt, so kann im Getriebe bereits der entsprechende Zielgang vorgewählt werden, wodurch der Gangwechsel schneller durchgeführt und gegebenenfalls über eine Drehzahlnachführung der Brennkraftmaschine 12 ruckfrei aktiviert werden kann.

Wird das Kupplungspedal 22 im Schaltmodus versehentlich nicht betätigt, so ist über den Aktuator der Schalteinrichtung 30 der Schalthebel 32 gesperrt, um Fehlschaltungen oder Störungen in der Getriebesteuerung auszuschließen.

## Patentansprüche

1. Verfahren zum Betreiben eines Kraftfahrzeugs, insbesondere eines Personenkraftfahrzeugs, mit zumindest einer Antriebsmaschine (14) und einem automatischen Getriebe (16), wobei eine Einrichtung mit einem Kupplungspedal (22) zum Trennen der Antriebsverbindung und einem Schalthebel (32) zum manuellen Schalten der Übersetzungsstufen vorgesehen ist, und wobei ein elektronisches Steuergerät (20) vorgesehen ist, mittels dem die Funktionen Kuppeln und Schalten in korrespondierende Steuersignale für das automatische Getriebe (16) umgesetzt werden, **dadurch gekennzeichnet, dass** das Steuergerät (20) des automatischen Getriebes (16) mittels einer Umschalteinrichtung von Handschaltung auf automatische Schaltung umschaltbar ist, wobei dann die Steuersignale des Kupplungspedals (22) und die Gangschaltsignale des Schalthebels (32) entsprechend unterdrückt werden.

2. Verfahren nach Anspruch 1, **dadurch gekennzeichnet, dass** das Kupplungspedal (22) in der Pedalkraft und der Kupplungsfunktion ähnlich der Kupplungsbetätigung eines handgeschalteten Kraftfahrzeugs ausgelegt und auf die Steuerung (20) des automatischen Getriebes (16) übertragen wird.

3. Verfahren nach Anspruch 2, **dadurch gekennzeichnet, dass** die Pedalkraft und/oder die Kupplungsfunktion variabel steuerbar sind.

4. Verfahren nach einem der vorhergehenden Ansprüche, **dadurch gekennzeichnet, dass** der Schalthebel (32) in einer einem handgeschalteten Schaltgetriebe nachgebildeten Schaltkulisse (34) angeordnet ist, mittels der neben einer Leergasse (8) eine definierte Anzahl von Vorwärtsgängen und einem Rückwärtsgang schaltbar sind, wobei die Schaltsignale über das Steuergerät (20) in eine entsprechende Steuerung des automatischen Getriebes (16) in feste Übersetzungsverhältnisse umgewandelt wird.

5. Verfahren nach Anspruch 4, **dadurch gekennzeichnet, dass** der Schalthebel (32) in der Schaltkulisse (34) entsprechend eines bei handgeschalteten Kraftfahrzeugen bekannten H-Schaltbilds geschaltet werden kann.

6. Verfahren nach Anspruch 5, **dadurch gekennzeichnet, dass** die Betätigung des Schalthebels (32) in der Schaltkulisse (34) einer bei handgeschalteten Kraftfahrzeugen üblichen Rastierung und Schaltkraft nachgebildet wird.

7. Verfahren nach einem der vorhergehenden Ansprüche, **dadurch gekennzeichnet, dass** bei nicht betätigtem Kupplungspedal (22) der Schalthebel (32) in der Schaltkulisse (34) zur Vermeidung von Fehlschaltungen elektronisch oder mechanisch blockiert wird.

8. Verfahren nach einem der Ansprüche 1 bis 7, **dadurch gekennzeichnet, dass** in der Schaltkulisse (34) elektrische Anzeigen vorgesehen werden, die bei einem Umschalten des Steuergeräts (20) auf Automatikbetrieb von Ganganzeigen (zum Beispiel 1 - 7, R) in Fahrbetriebsmodi (zum Beispiel D, S, R, P) verändert werden.

9. Vorrichtung zur Durchführung des Verfahrens nach einem der vorhergehenden Ansprüche an einem Kraftfahrzeug (10) mit zumindest einer Antriebsmaschine (12) und einem automatischen Getriebe (16), das über ein elektronisches Steuergerät (20) in verschiedenen Fahrmodi steuerbar ist, wobei eine Kupplungseinrichtung (24) mit einem schwenkbar gelagerten Kupplungspedal (22) und einem Kupplungsbetätigungskräfte simulierenden Aktuator, eine einem Handschaltgetriebe entsprechende Schaltbetätigungseinrichtung (30) mit einem entsprechend Gangstellungen (1 - 7., R) und einer Leergasse (8) simulierenden Aktuator vorgesehen sind und dass die Aktuatoren elektrische Signale zur Steuerung des automatischen Getriebes (16) in einem Handschaltmodus abgeben, **dadurch gekennzeichnet, dass** ein elektrischer Umschalter vorgesehen ist, mittels dem das Kraftfahrzeug auf automatischen Fahrbetrieb umsteuerbar ist, bei dem Signale der Kupplungseinrichtung (24) und der Gangwechsel der Schalteinrichtung (30) unterdrückt sind.

10. Vorrichtung nach Anspruch 9, **dadurch gekennzeichnet, dass** das automatische Getriebe ein Doppelkupplungsgetriebe (16) ist, dessen beide Kupplungen im Handschaltbetrieb über das Kupplungspedal (22) und dessen Schaltaktuatoren über die Schaltbetätigung (30) entsprechend angesteuert sind.

## Claims

1. Method for operating a motor vehicle, in particular a passenger car, with at least one drive engine (14) and an automatic transmission (16), wherein a mechanism is provided with a clutch pedal (22) for separating the drive connection and a shift lever (32) for manually shifting the transmission ratios, and wherein an electronic control unit (20) is provided, by means of which the functions of clutching and shifting are converted into corresponding control signals for the automatic transmission (16), **characterised in that** the control unit (20) of the automatic transmission (16) can be shifted by means of a shifting device from manual transmission to automatic transmission, wherein then the control signals of the clutch pedal (22) and the gear shift signals of the shift lever (32) are suppressed accordingly.

2. Method according to claim 1, **characterised in that** the clutch pedal (22) imitates the clutch actuation of a manually shifted motor vehicle with respect to the pedal force and clutch function and is transferred to the control unit (20) of the automatic transmission (16).

3. Method according to claim 2, **characterised in that** the pedal force and/or the clutch function are variably controllable.

4. Method according to any of the preceding claims, **characterised in that** the shift lever (32) is arranged in a shifting gate (34) imitating a manually shifted transmission, by means of which a defined number of forward gears and one reverse gear, in addition to an idle position (8), can be shifted, wherein the shift signals are converted via the control unit (20) into a corresponding control of the automatic transmission (16) in fixed transmission ratios.

5. Method according to claim 4, **characterised in that** the shift lever (32) can be shifted in the shifting gate (34) according to an H shifting pattern known for manually shifted motor vehicles.

6. Method according to claim 5, **characterised in that** the actuation of the shift lever (32) in the shifting gate (34) imitates a catching and shifting force usual in manually shifted motor vehicles.

7. Method according to any of the preceding claims, **characterised in that** when the clutch pedal (22) is not actuated the shift lever (32) is electronically or mechanically blocked in the shifting gate (34) in order to avoid erroneous shifts.

8. Method according to any of claims 1 to 7, **characterised in that** electrical displays are provided in the shifting gate (34), and these displays are changed into drive operation modes (for example D, S, R, P) in the case of shifting the control unit (20) to automatic operation from gear displays (for example 1-7, R).

9. Device for performing the method according to any of the preceding claims on a motor vehicle (10) having at least one drive engine (12) and an automatic transmission (16), which can be controlled in different driving modes via an electronic control unit (20), wherein a clutch mechanism (24) with a pivotably mounted clutch pedal (22) and an actuator simulating clutch actuation forces, a shift actuating mechanism (30) corresponding to a manual transmission with an actuator simulating corresponding gear positions (1-7., R) and an idle position (8) are provided, and in that the actuators emit electrical signals for controlling the automatic transmission (16) in a manual shift mode, **characterised in that** an electric switch is provided, by means of which the motor vehicle can be switched to automatic drive operation, in which signals of the clutch mechanism (24) and the gear change of the shift actuating mechanism (30) are suppressed.

10. Device according to claim 9, **characterised in that** the automatic transmission is a dual clutch transmission (16), two clutches of which are activated accordingly in a manual shift operation via the clutch pedal (22) and the shift actuators of which are activated accordingly by the shift actuating mechanism (30).

## Revendications

1. Procédé de fonctionnement d'un véhicule automobile, en particulier d'un véhicule particulier, avec au moins une machine d'entraînement (14) et une transmission automatique (16), dans lequel un dispositif avec une pédale d'embrayage (22) est prévu pour la séparation de la liaison d'entraînement et un levier de vitesses (32) pour la commutation manuelle des rapports de transmission, et dans lequel un appareil de commande (20) électronique est prévu, au moyen duquel les fonctions embrayage et passage de vitesse sont converties en signaux de commande correspondants pour la transmission automatique (16), **caractérisé en ce que** l'appareil de commande (20) de la transmission automatique (16) peut être commuté au moyen d'un dispositif de commutation de la boîte manuelle à la boîte automatique, dans lequel les signaux de commande de la pédale d'embrayage (22) et les signaux de changement de vitesse du levier de vitesses (32) sont supprimés de manière correspondante.

2. Procédé selon la revendication 1, **caractérisé en ce que** la pédale d'embrayage (22) dans la force de pédale et la fonction d'embrayage est conçue de manière similaire à l'actionnement de l'embrayage d'un véhicule automobile à boîte manuelle et est transmise à la commande (20) de la transmission automatique (16).

3. Procédé selon la revendication 2, **caractérisé en ce que** la force de pédale et/ou la fonction d'embrayage sont commandables de manière variable.

4. Procédé selon l'une quelconque des revendications précédentes, **caractérisé en ce que** le levier de vitesses (32) est agencé dans une coulisse de changement de vitesse (34) formée selon une transmission de commutation à boîte manuelle, au moyen de laquelle outre une voie vide (8) un nombre défini de vitesses de marche avant et une vitesse de marche arrière sont commutables, dans lequel les signaux de commutation sont convertis par le biais de l'appareil de commande (20) dans une commande correspondante de la transmission (16) automatique en rapports de transmission fixes.

5. Procédé selon la revendication 4, **caractérisé en ce que** le levier de vitesses (32) peut être commuté dans la coulisse de changement de vitesse (34) selon une image de commutation H connue en cas de véhicules automobiles à boîte manuelle.

6. Procédé selon la revendication 5, **caractérisé en ce que** l'actionnement du levier de vitesses (32) dans la coulisse de changement de vitesse (34) est formé selon un accrochage et une force de commutation usuels en cas de véhicules automobiles à boîte manuelle.

7. Procédé selon l'une quelconque des revendications précédentes, **caractérisé en ce qu'**en cas de pédale d'embrayage (22) non actionnée le levier de vitesses (32) est bloqué électroniquement ou mécaniquement dans la coulisse de changement de vitesse (34) pour l'évitement de commutations erronées.

8. Procédé selon l'une quelconque des revendications 1 à 7, **caractérisé en ce que** des affichages électriques sont prévus dans la coulisse de changement de vitesse (34), lesquels sont modifiés en cas de commutation de l'appareil de commande (20) en mode automatique d'affichages de rapport (par exemple, 1-7, R) en modes de roulement (par exemple D, S, R, P).

9. Dispositif de réalisation du procédé selon l'une quelconque des revendications précédentes au niveau d'un véhicule automobile (10) avec au moins une machine d'entraînement (12) et une transmission automatique (16) qui peut être commandée par un appareil de commande électronique (20) dans différents modes de roulement, dans lequel un dispositif d'embrayage (24) avec une pédale d'embrayage (22) logée de manière pivotante et un actionneur simulant des forces d'actionnement d'embrayage, un dispositif d'actionnement de commutation (30) correspondant à une transmission à boîte manuelle avec un actionneur simulant selon les positions de rapport (1-7, R) et une voie vide (8) et que les actionneurs émettent des signaux électriques pour la commande de la transmission automatique (16) dans un mode de commande manuelle, **caractérisé en ce qu'**un commutateur électrique est prévu, au moyen duquel la commande du véhicule automobile peut être inversée pour passer en mode de roulement automatique, pour lequel des signaux du dispositif d'embrayage (24) et le changement de rapport du dispositif de commutation (30) sont supprimés.

10. Dispositif selon la revendication 9, **caractérisé en ce que** la transmission automatique est une transmission à double embrayage (16), dont les deux embrayages sont commandés de manière correspondante dans le mode de boîte manuelle par le biais de la pédale d'embrayage (22) et ses actionneurs de commutation par le biais de l'actionnement de commutation (30).
